(19) Europäisches Patentamt
European Patent Office
Office européen des brevets

(11) **EP 3 179 745 A1**

(12) **EUROPEAN PATENT APPLICATION**
published in accordance with Art. 153(4) EPC

(43) Date of publication:
**14.06.2017 Bulletin 2017/24**

(51) Int Cl.:
**H04W /** *(2009.01)*

(21) Application number: **16753808.1**

(86) International application number:
**PCT/CN2016/082801**

(22) Date of filing: **20.05.2016**

(87) International publication number:
**WO 2017/071186 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.10.2015 CN 201510729392**

(71) Applicants:
• **LE Holdings (Beijing) Co., Ltd.**
**Beijing 100025 (CN)**

• **Leauto Intelligent Technology (BEIJING) Co. Ltd**
**Beijing 100025 (CN)**

(72) Inventor: **DU, Zhaofeng**
**Beijing 100025 (CN)**

(74) Representative: **Maikowski & Ninnemann**
**Patentanwälte Partnerschaft mbB**
**Postfach 15 09 20**
**10671 Berlin (DE)**

(54) **MULTI-LINK BANDWIDTH ALLOCATION METHOD AND APPARATUS FOR MOBILE NETWORK, AND MOBILE DEVICE**

(57) A multilink bandwidth allocation method device for a mobile network based on signal strength is provided. The method involves obtaining the base stations of each of the links, a theoretical bandwidth of each of the links, information of the signal strength of the base station received by the mobile device in the aggregation links at the current time; calculating a floating ratio of the bandwidth of each of the links at the next time interval according to the obtained signal strength of the base station received by the mobile device; obtaining a prediction value of the bandwidth of each of the links at the next time interval according to the floating ratio of the bandwidth of each of the links and the theoretical bandwidth; and allocating the bandwidth for the data transmission at the next time interval between the mobile device and the base station according to the prediction value of the bandwidth of each of the links.

obtaining the base stations of each link of the links, a theoretical bandwidth of each link, information of the signal strength of the base station received by the mobile device at the current time in the aggregation links —— 110

calculating a floating ratio of the bandwidth of each link of the links at the next time interval according to the obtained signal strength —— 120

obtaining a prediction value of the bandwidth of each link of the links at the next time interval according to the floating ratio of the bandwidth of each link of the links and the theoretical bandwidth —— 130

allocating the bandwidth for the data transmission at the next time interval between the mobile device and the base station according to the prediction value of the bandwidth of each link of the links —— 140

FIG. 1

**Description**

**CROSS REFERENCE TO RELATED APPLICATION**

This application references to Chinese Patent Application No. 201510729392X, filed in China on October 30, 2015, entitled "MULTILINK BANDWIDTH ALLOCATION METHOD AND DEVICE FOR A MOBILE NETWORK BASED ON SIGNAL STRENGTH", the content of which is incorporated herein by reference in its entirety.

**FIELD OF TECHNOLOGY**

The disclosure is related to the field of link aggregation, and more particular to a multilink bandwidth allocation method and device for a mobile network based on signal strength.

**BACKGROUND**

Link aggregation technology refers to bundle multiple physical ports into a logical port to achieve load sharing for the incoming / outgoing traffic among the member ports. When the switch detects one member link port fails, the switch stops sending packets at this port, and recalculates the ports in the remaining links for sending the packets according load sharing scheme. After the recovery of the failed port, it recalculates the ports for sending the packets. The link aggregation is an important technology for increasing link bandwidth and achieving for link transmission elasticity and redundancy.

The existing link aggregation scheme is mostly used for wired data exchange network. As the wired network has higher network stability, the bandwidth allocation schemes on the link are usually relatively simple. For example, the allocation scheme, such as the cycle average allocation or the proportional allocation based on the link bandwidth, may achieve better aggregation effects.

With the development of the mobile internet, the signal quality, the network coverage and the transmission rate in the mobile communication network of the he wireless local area network (WLAN) and mobile operators have been greatly improved. In order to the data transmission rate, the real time and the stability over the mobile internet, the multilink aggregation technology scheme of the mobile network for data transmission emerges.

However, the network stability is worse and the fluctuation of data transmission is larger due to network coverage, signal strength, signal interference and objects shelter. If the same bandwidth allocation scheme as that of the wired network is adopted, the effects of the link aggregation would be very poor, even worse than the effect of using a single link for transmission.

Therefore, it is desirous to develop a technical solution to allocate the links for data transmission efficiently and reasonably by using the link aggregation technology in the mobile internet to achieve better aggregation effects.

**SUMMARY**

The embodiments of the disclosure provide a multilink bandwidth allocation method and device for a mobile network based on signal strength to solve the deficiency of the poor stability of the mobile network of the prior art and the poor aggregation effect due to the larger fluctuation of the date. The high efficient allocation for bandwidth in the link aggregation technology of the mobile network is achieved.

The embodiment of the present disclosure provides a multilink bandwidth allocation method for a mobile network based on signal strength, including:

obtaining the base stations of each of the links, a theoretical bandwidth of each of the links, information of the signal strength of the base station received by the mobile device at the current time in the aggregation links;

calculating a floating ratio of the bandwidth of each of the links at the next time interval according to the obtained signal strength of the base station received by the mobile device; wherein the floating ratio of the bandwidth of each of the links indicates the variation of the bandwidth of each of the links in the aggregation links;

obtaining a prediction value of the bandwidth of each of the links at the next time interval according to the floating ratio of the bandwidth of each of the links and the theoretical bandwidth; and

allocating the bandwidth for the data transmission at the next time interval between the mobile device and the base station according to the prediction value of the bandwidth of each of the links.

The embodiment of the present disclosure provides a multilink bandwidth allocation device for a mobile network based on signal strength, including:

a processor;

a memory for storing one or more instructions;

wherein when the one or more instructions are executed by the processor, the processor executes the following steps:

obtaining the base stations of each of the links, a theoretical bandwidth of each of the links, information of the signal strength of the base station received by the mobile device at the current time in the aggregation links;

calculating a floating ratio of the bandwidth of each of the links at the next time interval according to the obtained signal strength of the base station received by the mobile device; wherein the floating ratio of the bandwidth of each of the links indicates the variation of the bandwidth of each of the links in the aggregation links;

obtaining a prediction value of the bandwidth of each of the links at the next time interval according to the floating ratio of the bandwidth of each of the links and the theoretical bandwidth; and

allocating the bandwidth for the data transmission at the next time interval between the mobile device and the base station according to the prediction value of the bandwidth of each of the links.

The multilink bandwidth allocation method and device for a mobile network based on signal strength provided in the embodiments of the present disclosure may predict the status of the networks accessed by the mobile device in real time according to the variation of the signal strength of the base station received by the mobile device, and dynamically adjust the bandwidth of each of the links according to the current load capability of each of the links. The characteristics of rapid change of the signal in the mobile internet is completely considered. The load balance of the link aggregations in the mobile internet is achieved well. The good link aggregation effect is also achieved in the mobile internet.

## BRIEF DESCRIPTION OF THE DRAWING(S)

In order to illustrate the technical schemes of the prior art or the embodiments of the disclosure more clearly, the accompanying drawings for illustrating the prior art or the embodiments of the disclosure are briefly described as below. It is apparent that the drawings described below are merely some embodiments of the disclosure, and those skilled in the art may derive other drawings according the drawings described below without creative endeavor. In the drawings:

Fig. 1 illustrates the flow chart of the first embodiment of the present disclosure;

Fig. 2 illustrates the flow chart of the second embodiment of the present disclosure;

Fig. 3 illustrates the schematic structure for the device of the third embodiment of the present disclosure;

Fig. 4 illustrates the schematic structure for the device of the fifth embodiment of the present disclosure; and

Fig. 5 illustrates the schematic structure for the device of the sixth embodiment of the present disclosure.

## DESCRIPTION OF THE EMBODIMENTS

For the purpose, technical solution, and advantage of the disclosure becoming clearer, the specific embodiments of the disclosure combined with the accompanying drawings to clearly and completely are described as follows. Obviously, the described embodiments are only part of the embodiments of the disclosure rather than all embodiments. Based on the embodiments of the disclosure all other embodiments obtained by those having ordinary skills in this field without creative work are within the scope of protection of the disclosure.

In addition, the steps included in the methods of the embodiments of the present disclsoure shown in the drawings can be performed in such as a computer system with a set of computer-executable instructions. Furthermore, although in the flow chart for the method in the embodiments of the disclosure the technical solution of the disclsoure exhibits a certain logical order at the time of execution, in general however, the logical sequence is limited to the embodiments illustrated by the flow chart. In the other embodiments of the present disclosure, the logical sequence of the technical solutions of the present disclosure may also be presented in a way different from those in the drawings.

It should be noted that the implementation subject of the various embodiments of the present disclosure is an apparatus for performing bandwidth allocation. This apparatus may be integrated on a mobile device, or may be integrated in a server, or may exist independently, which is included in the present disclsoure, but is not limited to. Of course, the various embodiments of the present disclsoure do not exist independently, and may be complement or a combination with each other. For example, the second embodiment explains the details of the first embodiment. The second embodiment used in combination with the first embodiment may also exhibit the technical solution of the present disclosure. In order to facilitate the reader in understanding this scheme, a movable on-board equipment is described for the application scenario in the embodiments of the present disclsoure. However, the specific application fields of the present disclsoure are not limited to. For example, the scenario that a mobile phone downloads large amount of data may also be applied.

FIRST EMBODIMENT

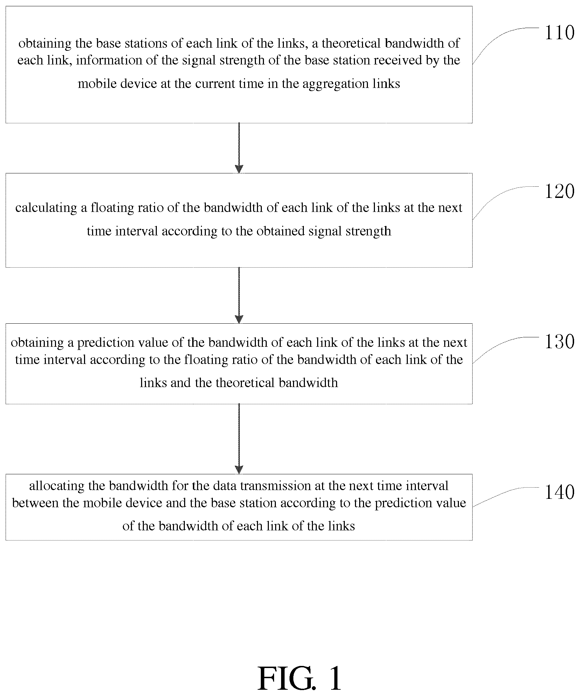

Fig. 1 illustrates the flow chart of the first embodiment of the present disclosure. As shown in Fig. 1, the multilink bandwidth allocation method for a mobile network based on signal strength according to the embodiment of the disclsoure is implemented by the following steps.

Step 110: obtaining the base stations of each of the links, a theoretical bandwidth of each of the links, information of the signal strength of the base station received by the mobile device at the current time in the aggregation links.

In the embodiment of the present disclosure, the theoretical bandwidth may be calculated according to the following formula:

$$\text{The theoretical bandwidth} = [(\text{the largest data length of ICMP single link} * 1000\text{ms}) / \text{network delay time}](1 - \text{packet loss rate});$$

Wherein each of the links obtains the packet loss rate of each of the links and the network delay time by way of sending/receiving ICPM packets through the peer link aggregation device. The unit of the network delay time is ms. The packet loss rate, or the loss tolerance, refers to the ratio of the amount of the lost data packages to the amount of sent data packages. The calculation of the packet loss rate is:

$$\text{the packet loss rate} = [(\text{input packet} - \text{output packet})/\text{input packet}] * 100\%.$$

ICMP refers to Internet Control Message Protocol, which is s sub protocol of TCP/IP protocol group, used to transmit control message between IP hosts and routers. The control message refers to the network message such as whether the network communication fails, whether the host is accessible, or whether the router is available. Although the control message does not transmit user data, it plays an important role for user data transmission.

When the mobile device connects to the operator network to establish an aggregation link with the peer link aggregation device, the base stations that each of the links connects to, such as China Mobile, China Unicom or China Telecom, may be recorded.

The mobile device in the embodiments of the disclsoure needs to equip with satellite positioning functions (e.g. GPS, GLONASS, BeiDou, single or combination). Furthermore, the position information of each mobile base station is stored in the mobile device. The following section related to the mobile device will not be further explained.

Step 120: calculating a floating ratio of the bandwidth of each of the links at the next time interval according to the obtained signal strength.

Wherein the floating ratio of the bandwidth of each of the links indicates the variation of the bandwidth of each of the links in the aggregation links; wherein the information of the signal strength includes the signal strength of the base station received by the mobile device at the current time and the variation trend of the signal strength of the base station received by the mobile device before the current time.

The signal strength of the base station received by the mobile device and the variation value of the signal strength of the base station received by the mobile device may be calculated by the information of the signal strength.

The step of calculating a floating ratio of the bandwidth of each of the links includes according to a predetermined expression formula, using the signal strength and the variation value of the signal strength as the input of the predetermined expression formula to determine the floating ration of the bandwidth in each of the links based on a normalized reference value; or according to a predetermined lookup table, using the signal strength and the variation value of the signal strength as the input of the lookup table to determine the floating ration of the bandwidth in each of the links.

Step 130: obtaining a prediction value of the bandwidth of each of the links at the next time interval according to the floating ratio of the bandwidth of each of the links and the theoretical bandwidth.

$$\text{Specifically, the prediction value of the bandwidth} = \text{the theoretical}$$

$$\text{bandwidth of the link} * (1 + \text{the floating ratio of the bandwidth of the link}).$$

In step 110, the theoretical bandwidth of each of the links at the current time in the aggregation links is obtained. The prediction value of the bandwidth of each of the links at the next time interval may be calculated according to the floating ratio of the bandwidth of each of the links.

Step 140: allocating the bandwidth for the data transmission at the next time interval between the mobile device and the base station according to the prediction value of the bandwidth of each of the links.

After the prediction value of the bandwidth of each of the links is obtained, the prediction value of the bandwidth of each of the links is sorted according to a descending order; in the predetermined time interval, when the allocated bandwidth of the link for the data transmission runs out, the next link is selected from the sorted values for the data transmission.

The load balance in each of the links of the aggregation links may be achieved by allocating the data carrying capacity of each of the links in proportion according to the prediction value of the bandwidth in different links. The effective or maximum link aggregation effect may be achieved by real-time adjustment of the amount of data carried by the link.

In this embodiment, through obtaining the information of the signal strength received by the mobile device, the status of each mobile network accessed by the mobile device is predicted in real time and the bandwidth of each of the links is thus predicted accordingly. Thus the dynamic adjustment on the load of each of the links is achieved. The good link aggregation effect is also achieved in the mobile network.

SECOND EMBODIMENT

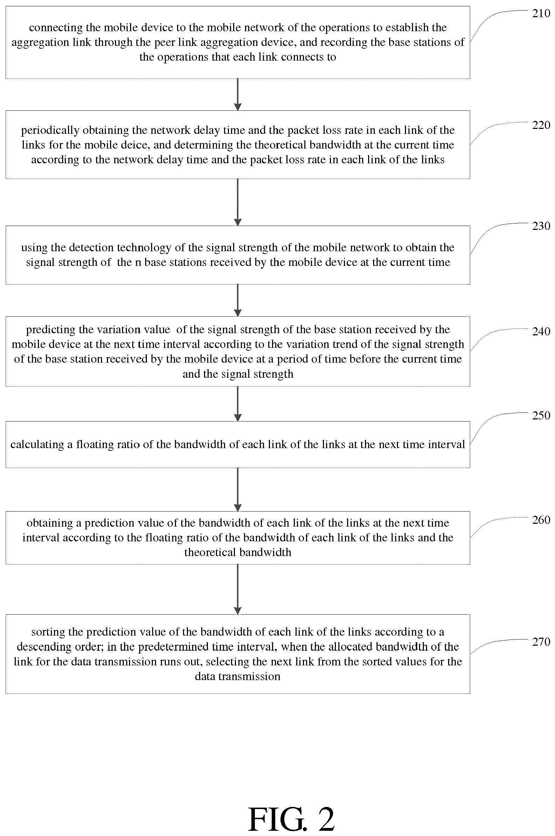

Fig. 2 illustrates the flow chart of the second embodiment of the present disclosure. In conjunction with Fig. 2, the specific description will be given for the multilink bandwidth allocation method for a mobile network based on signal strength according to the embodiment of the disclosure. The step of obtaining the base stations of the operators connecting with each of the links, a theoretical bandwidth of each of the links, information of the signal strength of the base station received by the mobile device at the current time in the aggregation links is further achieved by the step 210 to step 240 as follows. The step of calculating a floating ratio of the bandwidth of each of the links at the next time interval according to the obtained position information and the information of the signal strength is further achieved by the step 250. The step of calculating the prediction value of the bandwidth of each of the links and allocating the bandwidth is further achieved by the step 260 to step 270.

Step 210: connecting the mobile device to the mobile network of the operators to establish the aggregation links through the peer link aggregation device, and recording the base stations of the operations that each of the links connects to.

In the embodiment of the present disclosure, the mobile device is a terminal that is moveable and having wireless access function, such as a mobile phone, or a terminal connecting to the internet by MIFI (abbreviation of My WiFi) like a vehicle. GPS function of the mobile devices is typically achieved by means of a satellite positioning system. China's Beidou satellite navigation system (BDS), the US Global Positioning System (GPS), Russia's GLONASS satellite navigation system (GLONASS) and the European Galileo satellite navigation system (GALILEO), or the multi-network integration system constituted by combination of these satellite positioning systems are common satellite positioning systems.

In the embodiment of the disclosure, the base station is an operator base station providing the link in the aggregation links to the mobile device.

Step 220: periodically obtaining the network delay time and the packet loss rate in each of the links for the mobile deice, and determining the theoretical bandwidth at the current time according to the network delay time and the packet loss rate in each of the links.

Wherein, the mobile device determines the network delay time and the packet loss rate by way of sending/receiving ICPM (Internet Control Message Protocol) packets through the peer link aggregation device.

Specifically, the theoretical bandwidth of the link at the current time may be expressed by the following expression formula:

$$\text{The theoretical bandwidth} = [(\text{the largest data length of ICMP single link} *$$

$$1000\text{ms}) / \text{network delay time}](1 - \text{packet loss rate}).$$

Wherein the unit of the network delay time is ms, while the packet loss rate is a value greater than or equal to 0 and less than equal to 1:

$$\text{the packet loss rate} = [(\text{input packet} - \text{output packet})/\text{input packet}]*100\%.$$

Step 230: using the detection technology of the signal strength of the mobile network to obtain the signal strength of $S_i$ the n base stations received by the mobile device at the current time.

Wherein n is a positive integer greater or equal to 2, indicating an amount of the base stations that may cover the mobile device. $i$ indicates the sequence number of the base station, with the range of [1, n].

Step 240: predicting the variation value $\Delta S_i$ of the signal strength of the base station received by the mobile device at the next time interval according to the variation trend of the signal strength of the base station received by the mobile device at a period of time before the current time and the signal strength $S_i$.

Since the radio signal continues to decay during transmission, the farther transmission distance results in greater decay. The signal strength is an important factor affecting wireless transmission. Its changes have a greater effect on the current bandwidth of wireless transmission. Therefore, the purpose of determining the variation of the signal strength is to quantitatively predict the amount of the bandwidth variation at the next time interval according to the strength variation.

Wherein the variation trend of the signal strength of the base station received by the mobile device at a period of time before the current time is mainly becoming stronger, weaker or no change. Further the variation may also include acceleration. The variation trend of the signal strength may be obtained by calculating the signal strength of each base station at each time interval of the period of time before the current time. A relatively simple calculation is mainly to calculate the average of the signal strength at each time interval of this period of time. The calculation may also impose weighting on the signal strength at each time interval during the calculation.

In the embodiment of the disclosure, the next time interval is a predetermined value, which may be 1 second or 1 minute. Of course, shorter time interval would result in the prediction value with higher precision. The embodiment of the disclosure does not limit the duration of the time interval.

Step 250: calculating a floating ratio of the bandwidth of each of the links at the next time interval according to the signal strength and the variation value of the signal strength.

In the embodiment of the disclosure, for the floating ratio of the bandwidth of the $i$th link, the floating ratio of the bandwidth of the $i$th link at the next time interval is determined according to the signal strength $S_i$ of the $i$th base station received by the mobile device at the current time, the variation $\Delta S_i$ of signal strength of the $i$th base station received by the mobile device at the current time and the normalized reference value.

As an exemplary embodiment, the floating ratio of the bandwidth of the $i$th link may be calculated by the following expression formula:

$$\text{the floating ratio of the bandwidth of the } i\text{th link} = (R_{si} \times s_i + R_{\Delta s} \times \Delta s_i)/\text{base}$$

Wherein, $R_{Si}$ is the weighting for the signal strength $S_i$ of the $i$th base station received by the mobile device at the current time, $R_{\Delta Si}$ is the weighting for the variation $\Delta S_i$ of signal strength of the $i$th base station received by the mobile device at the current time, and $base$ is the normalized reference value. These weighting values are usually greater or equal to 1, wherein $R_{Si}$, $R_{\Delta Si}$ and $base$ may be determined by an experience value.

In practical applications, in order to obtain the floating ratio of the bandwidth of the $i$th link more precisely, a lookup table may be adopted to determine the floating ratio of the bandwidth of each of the links. The lookup table records the relationship between the signal strength of the base station and the variation of the signal strength received by the mobile device at the current time, and the floating ratio of the bandwidth. And generally the efficiency is higher to determine the floating ratio of the bandwidth by using the lookup table.

Step 260: obtaining a prediction value of the bandwidth of each of the links at the next time interval according to the floating ratio of the bandwidth of each of the links and the theoretical bandwidth.

The prediction value of the bandwidth of each of the links at the next time interval is obtained according to the bandwidth of each of the links at the current time and the floating ratio of the bandwidth of each of the links. Specifically, the prediction value of the bandwidth of some link at the next time interval = the bandwidth of the link at the current time * (1 + the floating ratio of the bandwidth of the link).

Step 270: sorting the prediction value of the bandwidth of each of the links according to a descending order; in the predetermined time interval, when the allocated bandwidth of the link for the data transmission runs out, selecting the next link from the sorted values for the data transmission.

In this embodiment, the bandwidth of each of the links in the aggregation links at the next time interval is predicted by obtaining the information of the signal strength of the base station received by the mobile device, and the load of each of the links is adjusted in real time according to the prediction value, thereby achieving a high efficient effect for the link aggregation.

THIRD EMBODIMENT

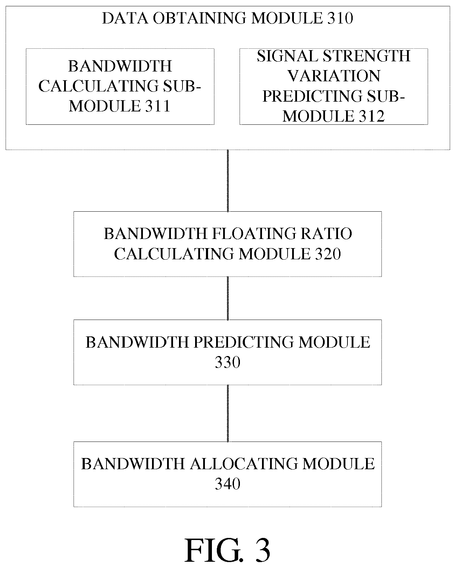

Fig. 3 illustrates the schematic structure for the device of the third embodiment of the present disclosure. As shown in Fig. 3, the multilink bandwidth allocation device for a mobile network based on signal strength according to the embodiment of the disclosure includes a data obtaining module 310, a bandwidth floating ratio calculating module 320, a bandwidth predicting module 330 and a bandwidth allocating module 340.

The data obtaining module 310 is used for obtaining information of the base stations of the operators connecting with each of the links, a theoretical bandwidth of each of the links, a signal strength of the base station received by the mobile device at the current time in the aggregation links.

The bandwidth floating ratio calculating module 320 is used for calculating a floating ratio of the bandwidth of each of the links at the next time interval according to the obtained signal strength of the base station received by the mobile device; wherein the floating ratio of the bandwidth of each of the links indicates the variation of the bandwidth of each of the links in the aggregation links.

The bandwidth predicting module 330 is used for obtaining a prediction value of the bandwidth of each of the links at the next time interval according to the floating ratio of the bandwidth of each of the links and the theoretical bandwidth.

The bandwidth allocating module 340 is used for allocating the bandwidth for the data transmission at the next time interval between the mobile device and the base station according to the prediction value of the bandwidth of each of the links.

Further, the data obtaining module 310 further includes a bandwidth calculating sub-module 311. The bandwidth calculating sub-module 311 is used for calculating the theoretical bandwidth according to the following formula:

$$\text{The theoretical bandwidth} = [(\text{the largest data length of ICMP single link} * 1000\text{ms}) / \text{network delay time}](1 - \text{packet loss rate}).$$

Wherein each of the links obtains the package loss rate of each of the links and the network delay time by way of sending/receiving ICPM packets through the peer link aggregation device.

Further, the data obtaining module 310 further includes a signal strength variation predicting sub-module 312.

The signal strength variation predicting sub-module 312 is used for obtaining the signal strength of the base station received by the mobile device at the current time and the variation trend of the signal strength of the base station received by the mobile device before the current time from the information of the signal strength; and predicting, by the base station, the variation value of the signal strength of the base station received by the mobile device at the next time interval according to the variation value of the signal strength of the base station received by the mobile device at the current time and the variation trend of the signal strength of the base station received by the mobile device before the current time;

Further, The signal strength variation predicting sub-module 312 is further used for calculating the floating ration of the bandwidth in each of the links at the next time interval according to the signal strength and the variation value of the signal strength.

Further, the bandwidth allocating module 340 is further used for sorting the prediction value of the bandwidth of each of the links according to a descending order; in the predetermined time interval, when the allocated bandwidth of the link for the data transmission runs out, selecting the next link from the sorted values for the data transmission.

In this embodiment, the information of the signal strength of the base station received by the mobile device is obtained by the data obtaining module. The status of each mobile network accessed by the mobile device is predicted in real time by the bandwidth floating ratio calculating module and the bandwidth predicting module, and the bandwidth of each of the links is thus predicted to achieve the dynamic adjustment on the load. It also achieves a good link aggregation effect in mobile network.

FOURTH EMBODIMENT

A more specific embodiment will be described in the following sections to explain the interaction of the functions for each module according to the multilink bandwidth allocation device for a mobile network based on signal strength of the disclsoure.

Step 410: the data obtaining module 310 records the base stations that each of the links connects to after the mobile device connects to the mobile networks of the operators to establish the aggregation link through the peer link aggregation device.

Step 420: the data obtaining module 310 periodically obtains the network delay time and the packet loss rate in each of the links for the mobile deice, and the bandwidth calculating sub-module 311 determines the theoretical bandwidth at the current time according to the network delay time and the packet loss rate in each of the links.

Wherein, the mobile device determines the network delay time and the packet loss rate by way of sending/receiving ICPM (Internet Control Message Protocol) packets through the peer link aggregation device.

Specifically, the theoretical bandwidth of the link at the current time may be expressed by the following expression formula:

$$\text{The theoretical bandwidth} = [(\text{the largest data length of ICMP single link} * 1000\text{ms}) / \text{network delay time}](1 - \text{packet loss rate}).$$

Wherein the unit of the network delay time is ms, while the packet loss rate is a value greater than or equal to 0 and less than equal to 1:

$$\text{the packet loss rate} = [(\text{input packet} - \text{output packet})/\text{input packet}]*100\%.$$

Step 430: the data obtaining module 310 uses the detection technology of the signal strength of the mobile network to obtain the signal strength of $S_i$ the base station received by the mobile device at the current time.

In the embodiment of the disclosure, the base station is an operator base station providing the link in the aggregation links to the mobile device.

Wherein n is a positive integer greater or equal to 2, indicating an amount of the base stations that may cover the mobile device. $i$ indicates the sequence number of the base station, with the range of [1, n].

In the embodiment of the disclosure, the next time interval is a predetermined value, which may be 1 second or 1 minute. Of course, shorter time interval would result in the prediction value with higher precision. The embodiment of the disclosure does not limit the duration of the time interval.

Step 440: the signal strength variation predicting sub-module 312 predicts the variation value $\Delta S_i$ of the signal strength of the base station received by the mobile device at the next time interval according to the variation trend of the signal strength of the base station received by the mobile device at a period of time before the current time.

Since the radio signal continues to decay during transmission, the farther transmission distance results in greater decay. The signal strength is an important factor affecting wireless transmission. Its changes have a greater effect on the current bandwidth of wireless transmission. Therefore, the purpose of determining the variation of the signal strength is to quantitatively predict the amount of the bandwidth variation at the next time interval according to the strength variation.

Wherein the variation trend of the signal strength of the base station received by the mobile device at a period of time before the current time is mainly becoming stronger, weaker or no change. Further the variation may also include acceleration. The variation trend of the signal strength may be obtained by calculating the signal strength of each base station at each time interval of the period of time before the current time. A relatively simple calculation is mainly to calculate the average of the signal strength at each time interval of this period of time. The calculation may also impose weighting on the signal strength at each time interval during the calculation.

Step 450: the bandwidth floating ratio calculating module 320 calculates a floating ratio of the bandwidth of each of the links at the next time interval according to the signal strength and the variation value of the signal strength.

In the embodiment of the disclosure, for the floating ratio of the bandwidth of the $i$th link, the floating ratio of the bandwidth of the $i$th link at the next time interval is determined according to the signal strength $S_i$ of the $i$th base station received by the mobile device at the current time, the variation $\Delta S_i$ of signal strength of the $i$th base station received by the mobile device at the current time and the normalized reference value.

8

As an exemplary embodiment, the floating ratio of the bandwidth of the *i*th link may be calculated by the following expression formula:

$$\text{the floating ratio of the bandwidth of the } {}^i\text{th link} = (R_{si} \times s_i + R_{\Delta s} \times \Delta s_i)/\text{base}$$

Wherein, $R_{Si}$ is the weighting for the signal strength $S_i$ of the *i* th base station received by the mobile device at the current time, $R_{\Delta Si}$ is the weighting for the variation $\Delta S_i$ of signal strength of the *i*th base station received by the mobile device at the current time, and *base* is the normalized reference value. These weighting values are usually greater or equal to 1, wherein $R_{Si}$, $R_{\Delta Si}$ and *base* may be determined by an experience value.

In practical applications, in order to obtain the floating ratio of the bandwidth of the *i*th link more precisely, a lookup table may be adopted to determine the floating ratio of the bandwidth of each of the links. The lookup table records the distance between the mobile device and the base station, the position variation of the mobile device relative to the base station, and the relationship between the signal strength of the base station and the variation of the signal strength at the current time, and the floating ratio of the bandwidth. And generally the efficiency is higher to determine the floating ratio of the bandwidth by using the lookup table.

Step 460: the bandwidth predicting module 360 obtains a prediction value of the bandwidth of each of the links at the next time interval according to the floating ratio of the bandwidth of each of the links and the theoretical bandwidth.

The prediction value of the bandwidth of each of the links at the next time interval is obtained according to the bandwidth of each of the links at the current time and the floating ratio of the bandwidth of each of the links. Specifically, the prediction value of the bandwidth of some link at the next time interval = the bandwidth of the link at the current time * (1 + the floating ratio of the bandwidth of the link).

Step 470: the bandwidth allocating module 340 sorts the prediction value of the bandwidth of each of the links according to a descending order; and in the predetermined time interval, when the allocated bandwidth of the link for the data transmission runs out, selects the next link from the sorted values for the data transmission.

FIFTH EMBODIMENT

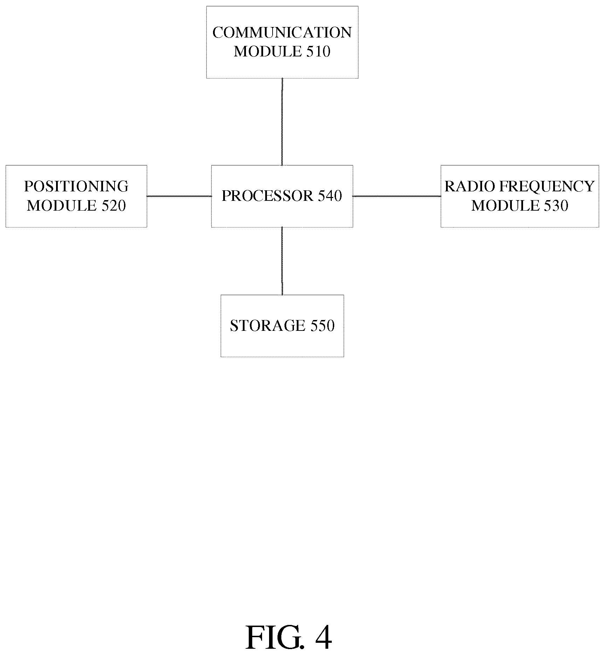

Fig. 4 illustrates the schematic structure for the device of the fifth embodiment of the present disclosure. As shown in Fig. 4, the mobile device according to the embodiment of the disclosure, under the signal coverage of a plurality of mobile communication network, with an aggregation link established by a plurality of surrounding base stations includes a communication module 510, a radio frequency module 520 and a processor 530.

The communication module 510 communicates wit the base station, for obtaining the base stations of the operators connecting with each of the links, a theoretical bandwidth of each of the links at the current time in the aggregation links.

The radio frequency module 520 , for obtaining information of the signal strength of the base station received by the mobile device at the current time in the aggregation links using the signal detection technology of the mobile network.

The processor 530 connects to the communication module 510 and the radio frequency module 520, and calculates a floating ratio of the bandwidth of each of the links at the next time interval according to the obtained position information and the information of the signal strength, obtains a prediction value of the bandwidth of each of the links at the next time interval according to the floating ratio of the bandwidth of each of the links and the theoretical bandwidth, and allocates the bandwidth for the data transmission at the next time interval between the mobile device and the base station according to the prediction value of the bandwidth of each of the links; wherein the floating ratio of the bandwidth of each of the links indicates the variation of the bandwidth of each of the links in the aggregation links.

Specifically, the communication module calculates the theoretical bandwidth according to the following formula:

$$\text{the theoretical bandwidth} = [(\text{the largest data length of ICMP single link} * 1000\text{ms}) / \text{network delay time}](1 - \text{packet loss rate}).$$

Wherein each of the links obtains the package loss rate of each of the links and the network delay time by way of sending/receiving ICPM packets through the peer link aggregation device.

Specifically, the radio frequency module 520 is further used for obtaining the signal strength of the base station received by the mobile device at the current time and the variation trend of the signal strength of the base station received by the mobile device before the current time from the information of the signal strength, and predicting the variation value of the signal strength of the base station received by the mobile device at the next time interval according to the variation value of the signal strength of the base station received by the mobile device at the current time and the variation trend of the signal strength of the base station received by the mobile device before the current time.

Specifically, the device further includes a storage 540 connected to the processor for storing a predetermined expression formula and a predetermined lookup table such that the processor 530 may use the signal strength and the variation value of the signal strength as the input of the predetermined expression formula to determine the floating ration of the bandwidth in each of the links based on a normalized reference value according to the predetermined expression formula, or uses the signal strength and the variation value of the signal strength as the input of the lookup table to determine the floating ration of the bandwidth in each of the links according to a predetermined lookup table.

Specifically, the process 530 is further used for sorting the prediction value of the bandwidth of each of the links according to a descending order; in the predetermined time interval, when the allocated bandwidth of the link for the data transmission runs out, selecting the next link from the sorted values for the data transmission.

As an exemplary embodiment, the floating ratio of the bandwidth of the $i$th link may be calculated by the following expression formula:

$$\text{the floating ratio of the bandwidth of the } {}^{i}\text{th link} = (R_{si} \times s_i + R_{\Delta s} \times \Delta s_i)/\text{base}$$

Wherein, $R_{Si}$ is the weighting for the signal strength $S_i$ of the $i$th base station received by the mobile device at the current time, $R_{\Delta Si}$ is the weighting for the variation $\Delta S_i$ of signal strength of the $i$th base station received by the mobile device at the current time, and *base* is the normalized reference value. These weighting values are usually greater or equal to 1, wherein $R_{Si}$, $R_{\Delta Si}$ and *base* may be determined by an experience value.

SIXTH EMBODIMENT

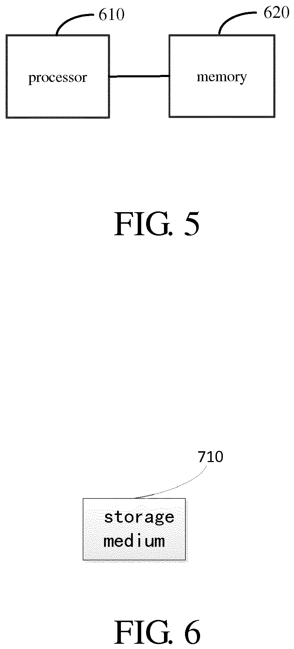

Fig. 5 illustrates the schematic structure for the device of the sixth embodiment of the present disclosure. As shown in Fig. 5, the multilink bandwidth allocation device for a mobile network based on signal strength according to the embodiment of the disclosure includes a processor 610 and a storage 620.

The memory 620 stores one or more instructions. When the one or more instructions are executed by the processor 610, the processor 610 executes the following steps:

obtaining the base stations of the operators connecting with each of the links in the aggregation links, a theoretical bandwidth of each of the links, information of the signal strength of the base station received by the mobile device at the current time;

calculating a floating ratio of the bandwidth of each of the links at the next time interval according to the obtained signal strength of the base station received by the mobile device; wherein the floating ratio of the bandwidth of each of the links indicates the variation of the bandwidth of each of the links in the aggregation links;

obtaining a prediction value of the bandwidth of each of the links at the next time interval according to the floating ratio of the bandwidth of each of the links and the theoretical bandwidth; and

allocating the bandwidth for the data transmission at the next time interval between the mobile device and the base station according to the prediction value of the bandwidth of each of the links.

In one embodiment, when the processor 610 executes the step of obtaining the theoretical bandwidth of each of the links in the multilink at the current time, the processor 610 further executes the following step:

calculating the theoretical bandwidth according to the following formula:

$$\text{The theoretical bandwidth} = [(\text{the largest data length of ICMP single}$$
$$\text{link} * 1000\text{ms}) / \text{network delay time}](1 - \text{packet loss rate});$$

wherein each of the links obtains the packet loss rate of each of the links and the network delay time by way of sending/receiving ICPM packets through the peer link aggregation device.

In one embodiment, when the processor 610 executes the step of calculating a floating ratio of the bandwidth of each of the links at the next time interval, the processor further executes the following steps:

obtaining the signal strength of the base station received by the mobile device at the current time and the variation trend of the signal strength of the base station received by the mobile device before the current time from the information of the signal strength;

predicting, by the base station, the variation value of the signal strength of the base station received by the mobile device at the next time interval according to the variation value of the signal strength of the base station received by the mobile device at the current time and the variation trend of the signal strength of the base station received by the mobile device before the current time;

calculating the floating ration of the bandwidth in each of the links at the next time interval according to the signal strength and the variation value of the signal strength.

In one embodiment, when the processor 610 executes the step of calculating a floating ratio of the bandwidth of each of the links at the next time interval, the processor 610 further executes the following steps:

according to a predetermined expression formula, using the signal strength and the variation value of the signal strength as the input of the predetermined expression formula to determine the floating ration of the bandwidth in each of the links based on a normalized reference value; or

according to a predetermined lookup table, using the signal strength and the variation value of the signal strength as the input of the lookup table to determine the floating ration of the bandwidth in each of the links.

In one embodiment, when the processor 610 executes the step of allocating the bandwidth for the data transmission between the mobile device and the base station according to the prediction value of the bandwidth of each of the links, the processor 610 further executes the following step:

sorting the prediction value of the bandwidth of each of the links according to a descending order; in the predetermined time interval, when the allocated bandwidth of the link for the data transmission runs out, selecting the next link from the sorted values for the data transmission.

Application Example

A more specific embodiment will be described in the following sections to explain the embodiment of the disclsoure. A on-board apparatus (that is the aforementioned mobile device capable of wireless link aggregation; it should be noted that the mobile device may also be a terminal such as a mobile phone, a PAD, a data backpack, a carry MIFI, or a router in other application scenario) has three mobile network modules. These three mobile network modules respectively access to China Mobile, China Unicom and China Telecom's service provider network, and form the respective link with the base station in the China Mobile network, the base station in the China Unicom network, and the China Telecom network. The on-board apparatus aggregates these three links together to form an aggregation link by MPTCP (Multipath TCP) technology.

This apparatus is currently being carried on the highway for use. There is a large amount of data needs to be sent and received through the apparatus. At time t0, the on-board apparatus obtains the current network standard and the current signal strength according to each mobile network module. Currently, the module corresponding to the China Mobile network accesses 4G network, and the signal strength is -50dBm; the module corresponding to the China Telecom network accesses 3G network, and the signal strength is -70dBm; the module corresponding to the China Unicom network accesses 2G network, and the signal strength is -90dBm. The change rate of the radio signal is calculated according to the position of the on-board apparatus from the base station, the movement speed relative to the base station and the signal strength. The China Mobile network is -10dBm/s; the China Telecom network is 5dBm/s; the China Unicom network is 2dBm/s.

Based on the above data, the floating rate of the bandwidth for each mobile network at the time interval of next second may be predicted by using the lookup table. The floating rate of the bandwidth of the China Mobile network is -10%, the floating rate of the bandwidth of the China Telecom network is 5%, and the floating rate of the bandwidth of the China Unicom network is 2%. At time t0, the actual bandwidth of the link between the on-board apparatus and the base station of the China Mobile network is 4Mbps. The actual bandwidth of the link between the on-board apparatus and the base station of the China Telecom network is 1Mbps. The actual bandwidth of the link between the on-board apparatus and the base station of the China Unicom network is 200Kbps. According to the floating rate, at the next second, the predicted bandwidth of the link between the on-board apparatus and the base station of the China Mobile network is 3.6Mbps, the predicted bandwidth of the link between the on-board apparatus and the base station of the China Telecom network is 1.05Mbps, and the predicted bandwidth of the link between the on-board apparatus and the base station of the China Unicom network is 204Kbps. Accordingly, at the next second, the on-board apparatus would allocate the date according to the predicted bandwidth of these three links.

The apparatus embodiments described above are merely illustrative, wherein the unit described as a separate member may or may not be physically separate, and the component shown as a unit may or may not be physical units, i.e., it may be located in one place, or may be distributed to various network elements. Some or all of the modules may be selected to achieve the purpose of the present examples of the embodiments according to the actual need. Those of ordinary skill in the case may understand and implement the disclosure without paying any creative work.

The above description of embodiments, those skilled in the art can clearly understand the various embodiments may be implemented by software plus a necessary universal hardware platform for implementation, and of course, also be implemented by hardware. Based on this understanding, the nature of the technical proposal or the part contributing to the prior art may be embodied in the form of a software product. The computer software product may be stored in a computer readable storage medium, such as ROM/RAM, magnetic disc, CD-ROM, including several instructions to instruct a computer device (a personal computer, a server, or a network equipment) to perform the method described in some parts of the various embodiments or examples.

Finally, it should be noted that the above embodiments are merely provided for describing the technical solutions of the disclosure, but not intended to limit the disclosure. Although reference to the embodiments of the disclosure has been described in details, those skilled in the art will appreciate that the technical solutions described in the foregoing embodiments can be modified, or equivalently replaced for some technical features; and such modifications or replacements do not make the essence of the corresponding technical solutions depart from the spirit and scope of the technical implementation of the disclosure.

**Claims**

1. A multilink bandwidth allocation method for a mobile network based on signal strength, comprising:

   obtaining the base stations of the operators connecting with each link in the aggregation link, a theoretical bandwidth of each link, information of the signal strength of the base station received by the mobile device at the current time;
   calculating a floating ratio of the bandwidth of each link at the next time interval according to the obtained signal strength of the base station received by the mobile device; wherein the floating ratio of the bandwidth of each link indicates the variation of the bandwith of each link in the aggregation link;
   obtaining a prediction value of the bandwidth of each link at the next time interval according to the floating ratio of the bandwidth of each link and the theoretical bandwidth; and
   allocating the bandwidth for the data transmission at the next time interval between the mobile device and the base station according to the prediction value of the bandwidth of each link.

2. The method according to claim 1, wherein the step of obtaining the theoretical bandwidth of each link in the multilink at the current time further comprise:

   calculating the theoretical bandwidth according to the following formula:

   $$\text{The theoretical bandwidth} = [(\text{the largest data length of ICMP single link} * 1000\text{ms}) / \text{network delay time}](1 - \text{packet loss rate});$$

   wherein each link obtains the packet loss rate of each link and the network dealy time by way of sending/receiving ICPM packets through the peer link aggregation device.

3. The method according to claim 1, wherein the step of calculating a floating ratio of the bandwidth of each link at the next time interval further comprise:

   obtaining the signal strength of the base station received by the mobile device at the current time and the variation trend of the signal strength of the base station received by the mobile device before the current time from the information of the signal strength;

predicting, by the base station, the varariation value of the signal strength of the base station received by the mobile device at the next time interval according to the variation value of the signal strength of the base station received by the mobile device at the current time and the variation trend of the signal strength of the base station received by the mobile device before the current time;

calculating the floating ration of the bandwidth in each link at the next time interval according to the signal strength and the variation value of the signal strength.

4. The method according to claim 3, wherein the step of calculating a floating ratio of the bandwidth of each link at the next time interval further comprise:

according to a predetermined expression formula, using the signal strength and the variation value of the signal strength as the input of the predetermined expression formula to determine the floating ration of the bandwidth in each link based on a normalized reference value; or

according to a predetermined lookup table, using the signal strength and the variation value of the signal strength as the input of the lookup table to determine the floating ration of the bandwidth in each link.

5. The method according to claim 1, wherein the step of allocating the bandwidth for the data transmission between the mobile device and the base station according to the prediction value of the bandwidth of each link further comprises:

sorting the prediction value of the bandwidth of each link according to a decending order; in the predetermined time interval, when the allocated bandwidth of the link for the data transmission, selecting the next link for the data transmission from the sorted prediction value of the bandwidth.

6. A multilink bandwidth allocation device for a mobile network based on signal strength, comprising:

a data obtaining module, for obtaining information of the base stations of the operators connecting with each link in the aggregation link, a theoretical bandwidth of each link, a signal strength of the base station received by the mobile device at the current time;

a bandwidth floating ratio calculating module, for calculating a floating ratio of the bandwidth of each link at the next time interval according to the obtained signal strength of the base station received by the mobile device; wherein the floating ratio of the bandwidth of each link indicates the variation of the bandwith of each link in the aggregation link;

a bandwidth predicting module, for obtaining a prediction value of the bandwidth of each link at the next time interval according to the floating ratio of the bandwidth of each link and the theoretical bandwidth; and

a bandwidth allocating module, for allocating the bandwidth for the data transmission at the next time interval between the mobile device and the base station according to the prediction value of the bandwidth of each link.

7. The deviceaccording to claim 6, wherein the data obtaining module further comprises a bandwidth calculating sub-module, the bandwidth calculating sub-module is used for:

calculating the theoretical bandwidth according to the following formula:

$$\text{The theoretical bandwidth} = [(\text{the largest data length of ICMP single link} *$$

$$1000ms) / \text{network delay time}](1 - \text{packet loss rate});$$

wherein each link obtains the packet loss rate of each link and the network dealy time by way of sending/receiving ICPM packets through the peer link aggregation device.

8. The deviceaccording to claim 6, wherein the data obtaining module further comprises a signal strength variation predicting sub-module;

the signal strength variation predicting sub-module is used for:

obtaining the signal strength of the base station received by the mobile device at the current time and the variation trend of the signal strength of the base station received by the mobile device before the current time from the information of the signal strength;

predicting, by the base station, the varariation value of the signal strength of the base station received by the mobile device at the next time interval according to the variation value of the signal strength of the base station received by the mobile device at the current time and the variation trend of the signal strength of the base station received by the mobile device before the current time;

calculating the floating ration of the bandwidth in each link at the next time interval according to the signal strength and the variation value of the signal strength.

9. The deviceaccording to claim 8, wherein the bandwidth floating ratio calculating module is further used for:

according to a predetermined expression formula, using the signal strength and the variation value of the signal strength as the input of the predetermined expression formula to determine the floating ration of the bandwidth in each link based on a normalized reference value; or

according to a predetermined lookup table, using the signal strength and the variation value of the signal strength as the input of the lookup table to determine the floating ration of the bandwidth in each link.

10. The deviceaccording to claim 6, wherein the bandwidth allocating module is further used for:

sorting the prediction value of the bandwidth of each link according to a decending order; in the predetermined time interval, when the allocated bandwidth of the link for the data transmission, selecting the next link for the data transmission from the sorted prediction value of the bandwidth.

11. A mobile device, under the signal coverage of a plurality of mobile communication network, with an aggregation link established by a plurality of surrounding base stations, the mobile device comprises:

a communication module, for obtaining the base stations of the operators connecting with each link in the aggregation link, a theoretical bandwidth of each link at the current time;

a radio frequency module, for obtaining information of the signal strength of the base station received by the mobile device at the current time;

a processor, for calculating a floating ratio of the bandwidth of each link at the next time interval according to the obtained position information and the information of the signal strength, obtaining a prediction value of the bandwidth of each link at the next time interval according to the floating ratio of the bandwidth of each link and the theoretical bandwidth, and allocating the bandwidth for the data transmission at the next time interval between the mobile device and the base station according to the prediction value of the bandwidth of each link;

wherein the floating ratio of the bandwidth of each link indicates the variation of the bandwith of each link in the aggregation link.

12. The deviceaccording to claim 11, wherein the communication module calculates the theoretical bandwidth according to the following formula:

$$\text{The theoretical bandwidth} = [(\text{the largest data length of icmp single link} * 1000ms) / \text{network delay time}](1 - \text{packet loss rate});$$

wherein each link obtains the packet loss rate of each link and the network dealy time by way of sending/receving ICPM packets through the peer link aggregation device.

13. The deviceaccording to claim 11, wherein the radio frequency module is further used for obtaining the signal strength of the base station received by the mobile device at the current time and the variation trend of the signal strength of the base station received by the mobile device before the current time from the information of the signal strength, and predicting the varariation value of the signal strength of the base station received by the mobile device at the next time interval according to the variation value of the signal strength of the base station received by the mobile device at the current time and the variation trend of the signal strength of the base station received by the mobile device before the current time.

14. The device according to claim 11, wherein the process is further used for according to a predetermined expression formula, using the signal strength and the variation value of the signal strength as the input of the predetermined expression formula to determine the floating ration of the bandwidth in each link based on a normalized reference value; or

according to a predetermined lookup table, using the signal strength and the variation value of the signal strength as the input of the lookup table to determine the floating ration of the bandwidth in each link.

15. The device according to claim 11, wherein the process is further used for sorting the prediction value of the bandwidth of each link according to a decending order; in the predetermined time interval, when the allocated bandwidth of the link for the data transmission, selecting the next link for the data transmission from the sorted prediction value of the bandwidth.

obtaining the base stations of each link of the links, a theoretical bandwidth of each link, information of the signal strength of the base station received by the mobile device at the current time in the aggregation links ⟋ 110

calculating a floating ratio of the bandwidth of each link of the links at the next time interval according to the obtained signal strength ⟋ 120

obtaining a prediction value of the bandwidth of each link of the links at the next time interval according to the floating ratio of the bandwidth of each link of the links and the theoretical bandwidth ⟋ 130

allocating the bandwidth for the data transmission at the next time interval between the mobile device and the base station according to the prediction value of the bandwidth of each link of the links ⟋ 140

# FIG. 1

connecting the mobile device to the mobile network of the operations to establish the aggregation link through the peer link aggregation device, and recording the base stations of the operations that each link connects to ⟍ 210

periodically obtaining the network delay time and the packet loss rate in each link of the links for the mobile deice, and determining the theoretical bandwidth at the current time according to the network delay time and the packet loss rate in each link of the links ⟍ 220

using the detection technology of the signal strength of the mobile network to obtain the signal strength of the n base stations received by the mobile device at the current time ⟍ 230

predicting the variation value of the signal strength of the base station received by the mobile device at the next time interval according to the variation trend of the signal strength of the base station received by the mobile device at a period of time before the current time and the signal strength ⟍ 240

calculating a floating ratio of the bandwidth of each link of the links at the next time interval ⟍ 250

obtaining a prediction value of the bandwidth of each link of the links at the next time interval according to the floating ratio of the bandwidth of each link of the links and the theoretical bandwidth ⟍ 260

sorting the prediction value of the bandwidth of each link of the links according to a descending order; in the predetermined time interval, when the allocated bandwidth of the link for the data transmission runs out, selecting the next link from the sorted values for the data transmission ⟍ 270

# FIG. 2

DATA OBTAINING MODULE 310

BANDWIDTH CALCULATING SUB-MODULE 311

SIGNAL STRENGTH VARIATION PREDICTING SUB-MODULE 312

BANDWIDTH FLOATING RATIO CALCULATING MODULE 320

BANDWIDTH PREDICTING MODULE 330

BANDWIDTH ALLOCATING MODULE 340

FIG. 3

```
                    ┌─────────────────────┐
                    │   COMMUNICATION     │
                    │    MODULE 510       │
                    └──────────┬──────────┘
                               │
                               │
┌─────────────────┐  ┌─────────┴─────────┐  ┌─────────────────────┐
│  POSITIONING    │  │                   │  │  RADIO FREQUENCY    │
│  MODULE 520     │──│  PROCESSOR 540    │──│   MODULE 530        │
└─────────────────┘  └─────────┬─────────┘  └─────────────────────┘
                               │
                               │
                    ┌──────────┴──────────┐
                    │    STORAGE 550      │
                    └─────────────────────┘
```

# FIG. 4

610

620

processor

memory

FIG. 5

710

storage
medium

FIG. 6

# INTERNATIONAL SEARCH REPORT

| International application No. |
| --- |
| PCT/CN2016/082801 |

## A.  CLASSIFICATION OF SUBJECT MATTER

H04W 28/08 (2009.01) i; H04W 28/20 (2009.01) i; H04W 28/02 (2009.01) i

According to International Patent Classification (IPC) or to both national classification and IPC

## B.  FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: multilink, multi-channel, transmit, theory, predict, next second, network, state, float, multipath, aggregat+, link, MPTCP, bandwidth, distribute, assign, next time, signal, quality, strength, fluctuate, change, delay

## C.  DOCUMENTS CONSIDERED TO BE RELEVANT

| Category* | Citation of document, with indication, where appropriate, of the relevant passages | Relevant to claim No. |
| --- | --- | --- |
| A | CN 102098301 A (FUDAN UNIVERSITY), 15 June 2011 (15.06.2011), description, paragraphs [0016]-[0027] | 1-15 |
| A | CN 104753627 A (ZTE CORP.), 01 July 2015 (01.07.2015), the whole document | 1-15 |
| A | CN 104065468 A (BEIJING UNIVERSITY OF POSTS AND TELECOMMUNICATIONS), 24 September 2014 (24.09.2014), the whole document | 1-15 |
| A | US 2011296006 A1 (QUALCOMM INCORPORATED), 01 December 2011 (01.12.2011), the whole document | 1-15 |

☐ Further documents are listed in the continuation of Box C.   ☒ See patent family annex.

| | |
| --- | --- |
| *        Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 19 July 2016 (19.07.2016) | 26 July 2016 (26.07.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer CHEN, Wenjing Telephone No.: (86-10) 61648264 |
| --- | --- |

Form PCT/ISA/210 (second sheet) (July 2009)

## INTERNATIONAL SEARCH REPORT
### Information on patent family members

| | International application No. |
|---|---|
| | **PCT/CN2016/082801** |

| Patent Documents referred in the Report | Publication Date | Patent Family | Publication Date |
|---|---|---|---|
| CN 102098301 A | 15 June 2011 | None | |
| CN 104753627 A | 01 July 2015 | WO 2015096419 A1 | 02 July 2015 |
| CN 104065468 A | 24 September 2014 | None | |
| US 2011296006 A1 | 01 December 2011 | EP 2624508 A2 | 07 August 2013 |
| | | EP 2556645 A2 | 13 February 2013 |
| | | EP 2624509 A2 | 07 August 2013 |
| | | CN 103004167 A | 27 March 2013 |
| | | JP 2013528984 A | 11 July 2013 |
| | | JP 2015111879 A | 18 June 2015 |
| | | WO 2011127189 A2 | 13 October 2011 |
| | | KR 20130018858 A | 25 February 2013 |
| | | IN 2231MUMNP2012 A | 24 January 2014 |

Form PCT/ISA/210 (patent family annex) (July 2009)

**EP 3 179 745 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510729392 X